# EUROPEAN PATENT APPLICATION

(11) **EP 2 874 001 A1**
(43) Date of publication of application: **20.05.2015**
(21) Application number: 14184673.3
(22) Date of filing: 12.09.2014
(51) Int. Cl.: G02F 1/1335, G09F 9/30

(54) **Flat-panel display and method for making the same**

(30) Priority: 18.11.2013 CN 201310578414
(71) Applicant: EverDisplay Optronics (Shanghai) Limited, Shanghai 201508 (CN)
(72) Inventor: Dong, Ma Shao, 201508 Shanghai (CN); Jiang, He Zhi, 201508 Shanghai (CN); Wan, Huang Chu, 201508 Shanghai (CN)
(74) Representative: Szabo, Zsolt

(57) **Abstract**

A display includes a glass substrate, a glass panel, an emissive unit and an optical filter. The emissive unit is sandwiched between the glass substrate and the glass panel. The optical filter is placed in a path of blue light emitted from the display. The optical filter filters components with predetermined wavelengths from the blue light.

## Description

### BACKGROUND OF INVENTION

### 1. FIELD OF INVENTION

The present invention relates to a flat-panel display and a method for making the same, more particularly, to a flat-panel display capable of filtering blue light and a method for making the same.

### 2. RELATED PRIOR ART

Arguments about whether the use of electronic products for long hours would jeopardize human health are intensifying as more and more electric products are used in our everyday life. Such arguments are haunting flat-panel displays as well. Most of the arguments about flat-panel displays are focused on radiation.

Techniques for making LCDs and OLEDs are mature, and LCDs and OLED displays are replacing CRT displays. In comparison with CRT displays, LCDs and OLED displays emit only a little radiation. There are however unsolved problems of human eyes getting hurt by radiation from LCDs and OLED displays.

Visible light is a sort of electromagnetic waves, and electromagnetic waves are electromagnetic radiation. Hence, visible light is a sort of electromagnetic radiation in a broad sense, only not considered to be very harmful for humans. Visible light means electromagnetic radiation with wavelengths in the range of 390 to 760 nanometers that is visible to bare human eyes. Scientific studies have revealed that retinal cells contain a rare sort of retinene, A2E. A2E exhibits two peaks of absorption, one at 335 nanometers in the ultraviolet light zone, the other at 435 nanometers in the blue light zone. A2E is mildly toxic for retinal pigment epithelium in a dark environment. The toxicity of A2E rises tremendously in irradiation. The most common LCD and OLED emit light that includes a lot of high-energy short-wave blue light. To our best understanding, such high-energy short-wave blue light includes wavelengths in the range of 435 to 440 nanometers, at one of the peaks of absorption of A2E.

Such high-energy short-wave blue light hurts human eyes at two steps. At first, A2E absorbs such high-energy short-wave blue light and hence emits free radicals. The free radicals intensify the attack of the A2E on the retinal pigment epithelium, and cause atrophy of the retinal pigment epithelium, and eventually kill the photosensitive cells. The photosensitive cells are those which turn light into electronic signals that are transmitted to the brain through the optical nerve of the humans. The electronic signals are converted to images by the brain. The death of the photosensitive cells causes deterioration of eyesight and even complete loss of eyesight.

The present invention is therefore intended to obviate or at least alleviate the problems encountered in prior art.

### SUMMARY OF INVENTION

It is an objective of the present invention to provide a display with which human eyes are protected from harmful components of blue light.

To achieve the foregoing objective, the display includes a glass substrate, a glass panel and an emissive unit sandwiched between the glass substrate and the glass panel. An optical filter is placed in a path of blue light emitted from the display to filter components with predetermined wavelengths.

After the components with the predetermined wavelengths (smaller than 440 nanometers for example) are filtered from the blue light, the remaining components of the blue light are not harmful for human eyes.

In another aspect, the display is a liquid crystal display, an orange light-emitting diode display, or any other display

In another aspect, the optical filter is a long-wave-pass filter provided on a front or rear face of the glass panel.

In another aspect, the long-wave-pass filter is a multi-layer dielectric film coated on the glass panel by vacuum evaporation or sputtering or a single semiconductor layer coated on the glass panel by vacuum evaporation or sputtering.

It is another objective of the present invention to provide a method for making a display with which human eyes are protected from harmful components of blue light.

To achieve the foregoing objective, the method includes the step of providing an optical filter in a path of blue light emitted from the display to filter components with predetermined wavelengths.

In another aspect, the method is used to make a liquid crystal display.

In another aspect, the method is used to make an orange light-emitting diode display.

In another aspect, the step of providing the optical filter includes the step of providing a long-wave-pass filter on a front or rear face of a glass panel of the display to filter components with predetermined wavelengths.

In another aspect, the step of providing the long-wave-pass filter includes the step of providing a multi-layer dielectric film on the glass panel by vacuum evaporation or sputtering or the step of providing a single semiconductor layer on the glass panel by vacuum evaporation or sputtering.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a side view of a flat-panel display according to the first embodiment of the present invention; and
FIG. 2 is a side view of a flat-panel display according to the second embodiment of the present invention.

### DETAILED DESCRIPTION OF EMBODIMENTS

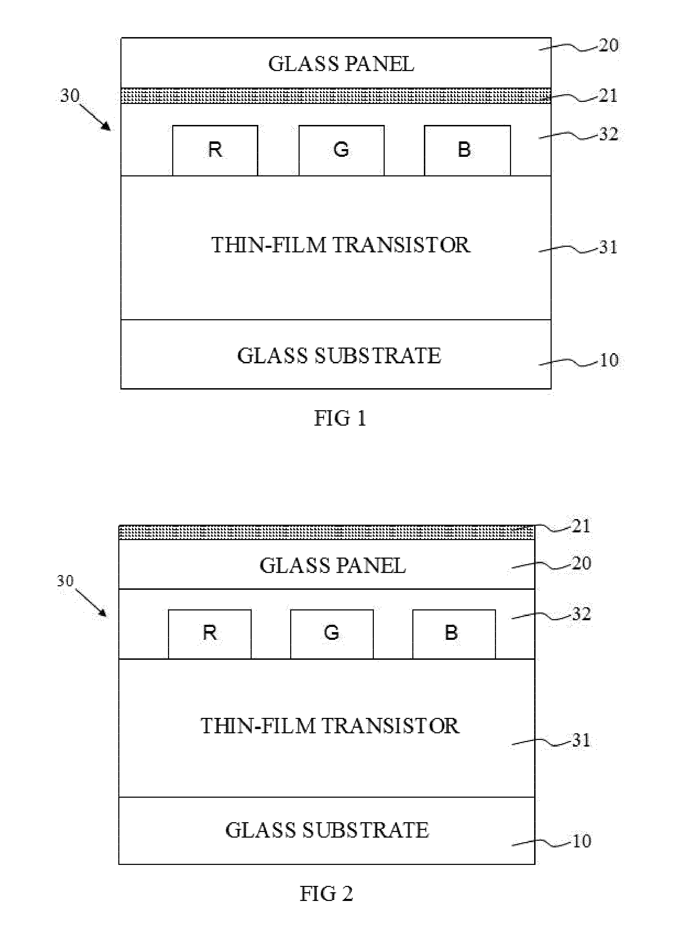

Referring to FIG. 1, there is a flat-panel display according to a first embodiment of the present invention. The flat-panel display is an OLED display according to the first embodiment. The OLED display includes e.g. a glass substrate 10, a glass panel 20 and an emissive unit 30 sandwiched between the glass substrate 10 and the glass panel 20. The substrate 10, the panel 20 may be made of other suitable materials to be more reliable and sustainable, even though the description hereinafter refers them as of glass. The emissive unit 30 includes a thin-film transistor ("TFT") 31 for driving and an emissive laminate 32 for emitting light. The emissive laminate 32 includes an anode made of ITO for example, a hole-transporting layer, an emissive layer, an electron-transporting layer and a cathode. Subjected to electricity at a proper voltage, holes are produced in the anode while electrons are produced in the cathode, and the holes are driven toward the electrons. The holes recombine with the electrons and emit radiation in the emissive layer. Based on the composition of the emissive layer, the emissive layer emits red light, green light and blue light and these primary colors of light are mixed into various colors of light. The operation and principles of the OLED display are conventional and will not be described in detail.

The emissive laminate 32 of the emissive unit 30 includes a blue light-emitting element 321. A long-wave-pass filter 21 is placed in the path of blue light emitted from the blue light-emitting element 321. The long-wave-pass filter 21 filters short-wave components from the blue light. Thus, the short-wave components with wavelengths smaller than a predetermined limit cannot pass the long-wave-pass filter 21. Hence, human eyes are protected from the short-wave components which exhibit high luminous intensity and high luminance. According to the first embodiment, the long-wave-pass filter 21 is provided on a rear face of the glass panel 20. The long-wave-pass filter 21 can be a multi-layer dielectric film made by vacuum evaporation or sputtering. Alternatively, the long-wave-pass filter 21 can be a single semiconductor layer.

In the case of the long-wave-pass filter 21 being a multi-layer dielectric film made by vacuum evaporation or sputtering, the operation is based on the diffraction of incident light so that components with wavelengths larger than a predetermined value (the "cutoff wavelength") pass the long-wave-pass filter 21 while components with wavelengths smaller than the cutoff wavelength are reflected or diffused from the long-wave-pass filter 21. The multi-layer dielectric film includes a structure of g(L/2)(HL)^{m}(L/2)a, wherein "g" stands for glass (optical element), "a" represents air, "L" stands for a low-index film with thickness of about 1/4 of the wavelength, "H" represents a high-index film with thickness of about 1/4 of the wavelength, and "m" stands for the number of cycles. The cutoff wavelength is 440 nanometers for example. Accordingly, the thickness of the layer L is 110 nanometers, L/2 is 55 nanometers, and H is 110 nanometers. The number of cycles, n, is selected according to the cutoff performance and cost. Generally speaking, the larger the number of cycles is, the better the cutoff performance is; however the higher the cost is. The low-index films can be made of SiO₂ (the refraction index is 1.45), and the high-index films can be made of TiO₂ (the refraction index is 2.3). The long-wave-pass filter 21 can however be made with any other proper structure.

Where the long-wave-pass filter 21 is a single semiconductor layer, the single semiconductor layer can also be coated on the glass panel 20 by vacuum evaporation or sputtering. The single semiconductor layer includes a band-gap structure for absorbing photons with energy larger than the band gap. The band gap of the semiconductor is about 2.8 eV where the cutoff wavelength is 440 nanometers for example. Inherently, the semiconductor absorbs photons with energy higher than 2.8 eV, i.e., components of light with wavelengths smaller than 440 nanometers. A typical semiconductor that includes a band gap of 2.8 eV is In₂O₃, which can be coated on the glass panel 20 by vacuum evaporation or sputtering. The semiconductor can be doped with Sn to adjust the band gap based on various cutoff wavelengths. Moreover, FeTiO₃ and PbO include a band gap of 2.8 eV. It is reasonable to expect to coat FeTiO₃ or PbO on the glass panel 20 to absorb components of light with wavelengths smaller than 440 nanometers as the technology advances.

Referring to FIG. 2, there is a flat-panel display according to a second embodiment of the present invention. The second embodiment is like the first embodiment except coating the long-wave-pass filter 21 on a front face of the glass panel 20. The second embodiment is otherwise identical to the first embodiment.

The long-wave-pass filter 21 can be used in a LCD. Like the case with the OLED display, the long-wave-pass filter 21 can directly be coated on a glass panel of the LCD to filter harmful components from blue light. Alternatively, the long-wave-pass filter 21 can be made as an individual sheet that can be attached to the glass panel of the LCD.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A display including a substrate, a panel and an emissive unit sandwiched between the substrate and the panel, **characterized in that** an optical filter is placed in a path of light emitted from the emissive unit to only allow light with predetermined wavelength to pass the panel.

2. The display according to claim 1, wherein the display is a liquid crystal display.

3. The display according to claim 1, wherein the display is an organic light-emitting diode display.

4. The display according to claim 1, wherein the optical filter is a long-wave-pass filter provided on one of front and rear faces of the panel.

5. The display according to claim 4, wherein the long-wave-pass filter is a multi-layer dielectric film coated on the panel by a method in the group consisting of vacuum evaporation and sputtering.

6. The display according to claim 4, wherein the long-wave-pass filter is a single semiconductor layer coated on the panel by a method in the group consisting of vacuum evaporation and sputtering.

7. The display according to claim 1, wherein the optical filter filters lights with wavelengths equal to or smaller than 440 nanometers.

8. The display according to claim 7, wherein the optical filter filters lights with wavelengths equal to or smaller than 435 nanometers.

9. The display according to claim 8, wherein the light is blue light.

10. A method for making a display, the method including the step of providing an optical filter in a path of blue light emitted from the display to filter lights with predetermined wavelengths.

11. The method according to claim 9, wherein the display is a liquid crystal display.

12. The method according to claim 9, wherein the display is an organic light-emitting diode display.

13. The method according to claim 9, wherein the step of providing the optical filter includes the step of providing a long-wave-pass filter on one of front and rear faces of a panel of the display.

14. The method according to claim 12, wherein the step of providing the long-wave-pass filter includes the step of providing a multi-layer dielectric film on the panel by a method selected from the group consisting of vacuum evaporation and sputtering.

15. The method according to claim 12, wherein the step of providing the long-wave-pass filter includes the step of providing a single semiconductor layer on the panel by a method in the group consisting of vacuum evaporation and sputtering.

16. The method according to claim 9, wherein the optical filter filters lights with wavelengths equal to or smaller than 440 nanometers.

17. The method according to claim 15, wherein the optical filter filters lights with wavelengths equal to or smaller than 435 nanometers.
